# DEMANDE DE BREVET EUROPEEN

(11) **EP 0 776 778 A1**
(43) Date de publication de la demande: **04.06.1997**
(21) Numéro de dépôt: 96402591.0
(22) Date de dépôt: 29.11.1996
(51) Int. Cl.: B60J 5/04

(54) **Elément métallique de structure d'un ouvrant de carrosserie de véhicule automobile, et ouvrant comportant un tel élément de structure**

(30) Priorité: 01.12.1995 FR 9514210
(71) Demandeur: Creica, 92602 Asnières Cedex (FR)
(72) Inventeur: Legoff, Valéry, 75017 Paris (FR); Testard, Claude, 95310 Saint-Ouen-l'Aumone (FR)
(74) Mandataire: Ernst-Schonberg, Michel

(57) **Abrégé**

L'invention propose un élément métallique de structure (10) d'un ouvrant de carrosserie de véhicule automobile, notamment d'une porte, caractérisé en ce qu'il présente une forme générale d'anneau, et en ce qu'il est réalisé au moins en partie en fonderie, notamment en alliage d'aluminium.

## Description

La présente invention concerne un élément métallique de structure d'un ouvrant de carrosserie de véhicule automobile, notamment d'une porte ou d'un volet, aussi appelé hayon.

Une porte de véhicule automobile, de structure classique, est constituée par un élément principal de structure, également appelé caisson, qui est réalisé sous la forme d'une pièce en tôle emboutie sur laquelle sont rapportés des éléments complémentaires tels par exemple un renfort recevant les charnières d'articulation de l'ouvrant, un renfort horizontal supérieur appelé renfort de bandeau et par exemple aussi un renfort de serrure.

Toutes ces pièces constituant le caisson et ses éléments complémentaires sont des pièces réalisées par emboutissage et/ou pliage nécessitant la mise en oeuvre d'un outillage spécifique de presse particulièrement coûteux et nécessitant de plus des montages d'assemblage et des opérations de soudage pour leur assemblage.

Afin de conférer une rigidité suffisante à l'élément de structure ou caisson, celui-ci se présente sensiblement sous la forme d'une plaque qui s'étend sur une grande partie du caisson et qui constitue un inconvénient majeur pour l'agencement des autres composants équipant la partie inférieure de la portière, tels que par exemple les mécanismes de manoeuvre d'une vitre mobile coulissante.

La présence de la tôle principale du caisson limite également les possibilités d'aménagement de l'espace interne de l'habitacle en ce qu'elle réduit les possibilités d'occuper la partie centrale du caisson pour y créer des dégagements qui accroissent l'espace intérieur disponible.

Selon une conception connue, la porte de véhicule peut aussi comporter une partie supérieure appelée cadre de porte, avec ou sans raidisseur, et qui constitue un cadre pour une vitre fixe ou mobile équipant la porte.

Dans ce cas, l'élément de structure ou caisson doit comporter des agencements particuliers pour l'assemblage et la fixation, par vissage ou par soudage, du cadre de porte, ce qui rend encore plus complexe la réalisation des composants principaux du caisson par emboutissage et soudage.

L'invention a pour objet de proposer une nouvelle conception d'un élément métallique de structure d'un ouvrant de carrosserie qui remédie aux inconvénients qui viennent d'être mentionnés.

Dans ce but, l'invention propose un élément métallique de structure caractérisé en ce qu'il présente une forme générale d'anneau et en ce qu'il est réalisé au moins en partie en fonderie, notamment en alliage léger d'aluminium ou de magnésium.

Selon d'autres caractéristiques de l'invention :
- il comporte deux montants latéraux opposés reliés entre eux par deux traverses sensiblement parallèles et les montants latéraux sont réalisés en fonderie ;
- l'une des deux traverses est réalisée venue de matière en fonderie avec les deux montants latéraux ;
- les deux traverses sont réalisées venues de matière en fonderie avec les deux montants latéraux pour constituer un élément de structure en une seule pièce ;
- l'un des montants comporte des moyens pour l'articulation de l'ouvrant sur la caisse du véhicule qui sont réalisés venus de matière en fonderie ;
- l'un des montants comporte des éléments, réalisés venus de matière en fonderie, tels qu'un support de rétroviseur, des points d'assemblage et de fixation d'un cadre de vitre, un logement pour un composant d'un mécanisme de serrure équipant l'ouvrant ;
- il comporte une barre anti-intrusion réalisée au moins en partie venue de matière en fonderie ;
- l'élément de structure est réalisé au moins en partie par thixoformage ;
- l'élément de structure est réalisé au moins en partie en fonderie sous pression sous vide ;
- l'élément de structure est réalisé au moins en partie en fonderie basse pression.

L'invention propose également un ouvrant de véhicule automobile, notamment une porte ou un hayon, caractérisé en ce qu'il comporte un élément de structure réalisé conformément aux enseignements de l'invention.

L'ouvrant comporte un cadre de vitre fixe ou mobile qui est réalisé au moins en partie venu de matière en fonderie avec l'élément de structure.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un élément de structure en une seule pièce réalisé conformément aux enseignements de l'invention ;
- la figure 2 est une vue schématique en section selon la ligne 2-2 de la figure 1 ;
- la figure 3 est une vue similaire à celle de la figure 1 et qui illustre un mode de réalisation en deux parties de l'élément de structure ; et
- la figure 4 est une vue similaire à celles des figures 1 et 3 qui illustre un mode de réalisation en quatre parties de l'élément de structure.

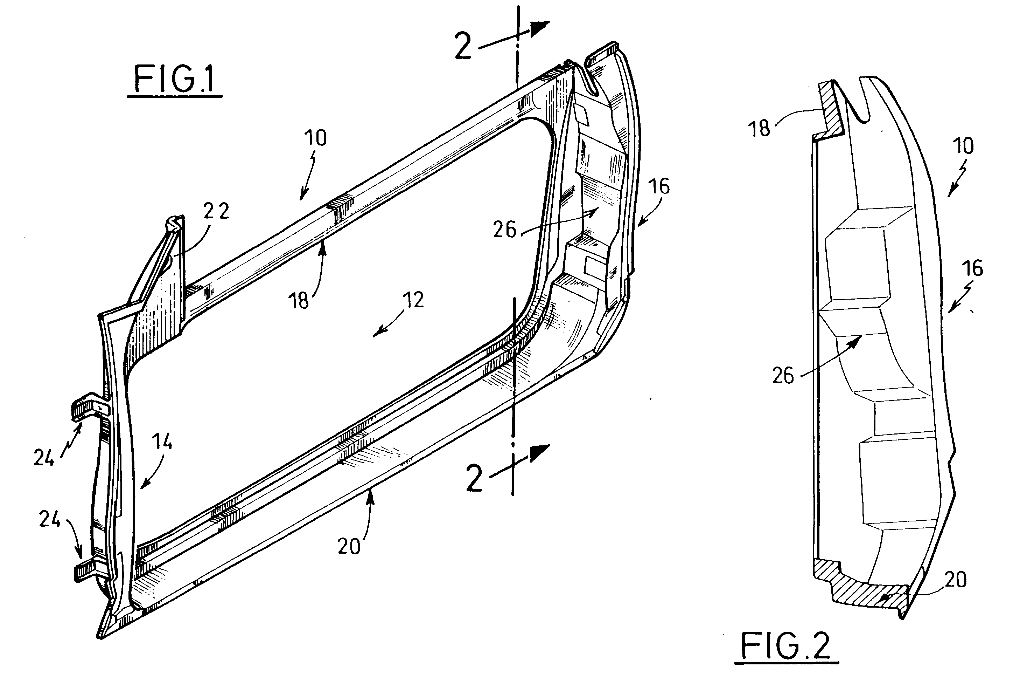

On a représenté sur la figure 1 un caisson 10 de porte de véhicule automobile (non représenté en détails) qui, conformément aux enseignements de l'invention, présente une forme générale d'anneau ouvert dans sa partie centrale 12 et qui est ici réalisé en une seule pièce par moulage en fonderie d'alliage léger, par exemple d'aluminium ou de magnésium.

Le caisson 10 est essentiellement constitué par deux montants latéraux opposés 14 et 16, ici verticaux dans le cas d'une porte de conception générale classique, qui sont reliés entre eux par deux éléments en forme de traverses longitudinales supérieure 18 et inférieure 20.

Le caisson 10 est ici le caisson d'une porte latérale avant de véhicule automobile et son montant 14 comporte, à sa partie supérieure, une portion en forme de plaque triangulaire 22 permettant notamment la fixation d'un rétroviseur de porte. La plaque 22 est réalisée venue de matière par moulage en fonderie avec le caisson 10.

Il en est de même des pattes 24 réalisées sur le montant latéral avant 14 qui constitue des éléments de charnières (non représentées en détails) pour l'articulation de la porte sur la caisse du véhicule.

Dans l'exemple illustré sur les figures, le montant latéral vertical arrière 16 présente une épaisseur transversale plus importante que le montant avant 14 et sa face transversale 26, perpendiculaire au plan général du caisson en forme d'anneau 10, délimite différentes zones pour la fixation et l'accrochage d'accessoires et/ou pour la formation de logements destinés à des mécanismes de serrure de porte ou pour des composants appartenant à ces mécanismes.

Les traverses longitudinales supérieure 18 et inférieure 20 présentent des profils simplifiés et on constate que la partie centrale 12 est entièrement dépourvue d'obstacles dégageant ainsi toute la zone interne pour une vitre de porte coulissante et son mécanisme d'actionnement. Cela permet aussi de réaliser un panneau d'habillage intérieur de la porte avec toute la latitude possible pour y former des dégagements augmentant l'espace disponible pour les occupants du véhicule.

Le caisson 10 peut être réalisé par moulage selon la technique de fonderie connue sous le nom de thixoformage.

Ce procédé se fonde sur les propriétés thixotropes des alliages d'aluminium et il permet, après préparation préalable de l'alliage, de mettre celui-ci en forme dans un moule dans lequel il est mis sous une forme sensiblement solide qui devient visqueuse lorsqu'elle est soumise à un fort cisaillement lors de l'injection sous pression dans un moule.

Le caisson 10 peut aussi être réalisé par moulage en fonderie sous pression sous vide.

Ce procédé consiste à introduire un alliage liquide non ferreux à grande vitesse dans un moule en ayant préalablement créé un vide dans le moule, une pression élevée étant exercée sur le métal durant la solidification.

Le caisson 10 peut également être réalisé par moulage en fonderie basse pression.

Ce procédé consiste à introduire un alliage non-ferreux dans un moule, une basse pression (de l'ordre de 2 à 3 bars) étant exercée sur le métal pendant sa solidification.

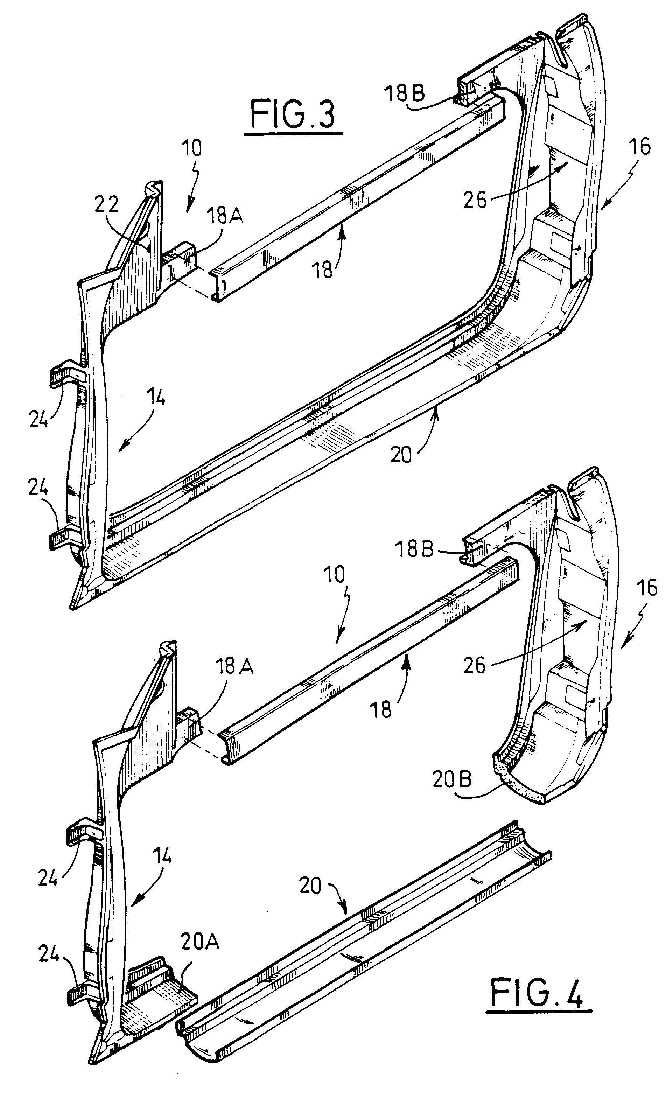

Dans le second mode de réalisation illustré à la figure 3, les deux montants latéraux verticaux 14 et 16 et la traverse longitudinale inférieure 20 sont réalisés par moulage en fonderie en une seule pièce, tandis que la traverse longitudinale supérieure 18 est réalisée sous la forme d'un bandeau rapporté qui est par exemple constitué par un tronçon de profilé qui est ensuite fixé sur des tronçons ou moignons d'extrémité 18A et 18B, eux-mêmes réalisés venus de matière en fonderie avec les montants latéraux 14 et 16.

Dans le troisième mode de réalisation illustré à la figure 4, la traverse longitudinale inférieure 20 est aussi réalisée sous la forme d'un élément rapporté constitué par un tronçon de profilé qui est fixé sur des tronçons ou moignons 20A et 20B réalisés venus de matière chacun respectivement avec le montant latéral vertical avant 14 et arrière 16, ces deux éléments étant alors les deux parties du caisson 10 réalisées par moulage en fonderie conformément aux enseignements de l'invention.

Selon une caractéristique, non représentée sur les figures, le caisson comporte une barre latérale, aussi appelée traverse anti-intrusion, qui est réalisée au moins en partie venue de matière par moulage en fonderie avec le caisson 10. La barre latérale anti-intrusion s'étend alors par exemple à mi-hauteur selon la direction parallèle aux traverses 18, 20.

Sans sortir du cadre de l'invention, il est aussi possible de réaliser un cadre supérieur servant notamment de cadre de vitre au moins en partie venu de matière par moulage en fonderie avec le caisson 10, c'est-à-dire avec les composants de ce dernier réalisés en fonderie.

## Revendications

1. Élément métallique de structure (10) d'un ouvrant de carrosserie de véhicule automobile, notamment d'une porte, du type qui présente une forme générale d'anneau et qui est réalisé au moins en partie en fonderie, notamment en alliage léger d'aluminium ou de magnésium, caractérisé en ce qu'il comporte deux montants latéraux opposés (14, 16) reliés entre eux par deux traverses sensiblement parallèles (18, 20), et en ce que les montants latéraux (14, 16) et les deux traverses (18, 20) sont réalisées venues de matière de fonderie pour constituer un élément de structure en une seule pièce.

2. Élément selon la revendication 1, caractérisé en ce que l'un (14) des montants latéraux comporte des moyens (24) pour l'articulation de l'ouvrant sur la caisse du véhicule qui sont réalisés venus de matière en fonderie.

3. Élément selon l'une quelconque des revendications précédentes, caractérisé en ce que l'un des montants (14, 16) comporte des éléments, réalisés venus de matière en fonderie, tels qu'un support (22) de rétroviseur, des points d'assemblage et de fixation d'un cadre de vitre, un logement pour un composant d'un mécanisme de serrure équipant l'ouvrant.

4. Élément selon l'une quelconque des revendications précédentes, caractérisé en ce qu'il comporte une barre anti-intrusion réalisée au moins en partie venue de matière en fonderie.

5. Élément selon l'une quelconque des revendications précédentes, caractérisé en ce qu'il est réalisé au moins en partie par thixoformage.

6. Élément selon l'une quelconque des revendications 1 à 4, caractérisé en ce qu'il est réalisé au moins en partie en fonderie sous pression sous vide.

7. Élément selon l'une quelconque des revendications 1 à 4, caractérisé en ce qu'il est réalisé au moins en partie en fonderie basse pression.

8. Ouvrant de véhicule automobile, notamment une porte ou un hayon, caractérisé en ce qu'il comporte un élément métallique de structure selon l'une quelconque des revendications 1 à 7.

9. Ouvrant selon la revendication 8, caractérisé en ce qu'il comporte un cadre de vitre, fixe ou mobile, qui est réalisé au moins en partie venu de matière en fonderie avec l'élément de structure (10).
